# EUROPEAN PATENT APPLICATION

(11) **EP 0 633 089 A1**
(43) Date of publication of application: **11.01.1995**
(21) Application number: 94303520.4
(22) Date of filing: 18.05.1994
(51) Int. Cl.: B23K 3/08

(54) **A diffusion apparatus**

(30) Priority: 09.07.1993 GB 9314211
(71) Applicant: The BOC Group plc, Windlesham Surrey GU20 6HJ (GB)
(72) Inventor: Precious, Colin John, Rotherham, S60 3BG (GB)
(74) Representative: Wickham, Michael

(57) **Abstract**

A diffusion apparatus 32 for use with a spraybar 20 used in, for example, supplying an inerting gas such as nitrogen into a process chamber. The apparatus comprises a sleeve 30 of mesh material 34 for providing around the spraybar 20. The mesh material may be single layered or multi-layered in which case it could be spirally wound or formed into concentric sleeves. In operation, the sleeve acts to further diffuse the gas emanating from the spraybar thereby to provide the diffusion performance similar to an expensive and easily broken sintered spraybar without the back pressure problems associated therewith.

## Description

The present invention relates to a fluid distribution apparatus and relates particularly, but not exclusively, to a diffusion apparatus for introducing an inerting gas into an enclosure used in, for example, wave or reflow soldering equipment.

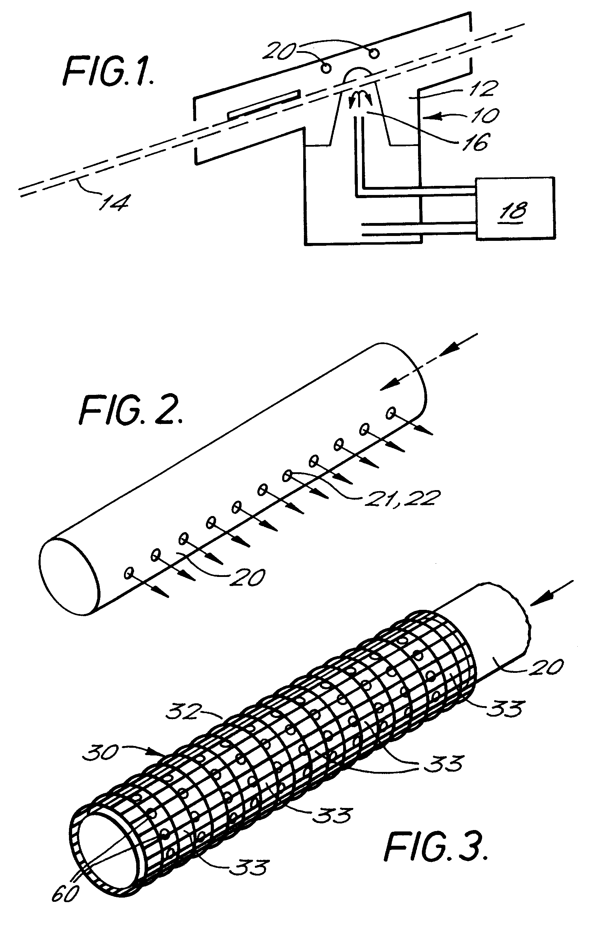

Patent application No GB 9121003.9 discloses a typical soldering apparatus including a soldering chamber as illustrated in Figure 1. A conveyor conducts circuit boards to be soldered through the chamber in which they come into contact with melten solder and are thus soldered where necessary. The chamber is provided with a plurality of spraybars for supplying non-oxidising gas such as nitrogen into the chamber to create therein a relatively non-oxidising soldering atmosphere.

The spraybars commonly comprise sintered stainless steel tubes having a small pore size. In operation, the inerting gas permeates through the poles and is distributed in a non-directional manner. Such tubes whilst being able to perform their function admirably well are comparatively expensive to produce and, due to their sintered nature, are easily broken in use. In addition, as they are partially sintered products with a small pore size they create an appreciable back pressure in the gas delivery system.

Also known are standard spraybars which comprise an elongate tube having a plurality of holes drilled therein. The inerting gas is diffused by simply spraying it through the holes and thereby mixing it with the contents of the enclosure. This arrangement whilst not suffering from the problem of back pressure is somewhat directional and is unable to diffuse the gas rapidly, and can therefore, be less efficient than is desired.

It is an object of the present invention to provide a diffusion apparatus which reduces and possibly eliminate the problems associated with the above mentioned spraybars.

Accordingly the present invention provides a diffusion apparatus for use with a spraybar comprising a tube having a plurality of holes provided therein for the passage of a fluid therethrough, the diffusion apparatus comprising a sleeve for fitment over said spraybar and having a plurality of holes greater in number than the holes in the spraybar over which in operation it is fitted.

It will be appreciated that the comparatively large number of holes provided in the sleeve will act to further diffuse any fluid exiting the holes in the spraybar without substantially affecting the back pressure of the overall apparatus.

For convenience and in order to produce a finer diffusion pattern, the sleeve may comprise a mesh.

The sleeve may comprise a sheet of mesh material spirally wound to form a sleeve of two or more layers, each layer of which will act to further diffuse any fluid passing therethrough.

Alternatively, the sleeve may comprise a plurality of concentric sleeves.

For convenience, securing means may be provided for securing the sleeve to the spraybar, and said securing means may comprise a plurality of straps around said sleeve.

Advantageously, the sleeve may comprise a stainless steel mesh which may have a mesh size of up to 5mm and may be formed from wire having a diameter of substantially 0.5mm.

The sleeve may include an unperforated shroud portion, thereby providing a semi-directional arrangement.

The diffusion apparatus may further comprise a spraybar having a plurality of holes provided therein for the passage of a fluid therethrough.

For increased performance, a plurality of rows of holes may be provided, each row extending along the length of the spraybar and being circumferentially spaced from the next adjacent row.

The present invention will now be more particularly described by way of example only with reference to the following drawings in which:
Figure 1 is a diagrammatic cross sectional view of a wave soldering apparatus incorporating fluid spraybars;
Figure 2 is an isometric view of a standard directional spraybar;
Figure 3 is an isometric view of a diffusion apparatus in accordance with one aspect of the present invention and seen in association with a spraybar in accordance with another aspect of the present invention;
Figures 4 to 6 are cross sectional views of various forms of sleeve and spraybar arrangements; and
Figure 7 is a cross sectional view of a semi directional sleeve and spraybar arrangement.

Referring now briefly to Figure 1, a typical wave soldering apparatus 10 includes a soldering chamber 12 and a conveyor 14. The conveyor 14 conducts circuit boards for example through the chamber such that the portion thereof which needs to be soldered comes into contact with a wave of hot solder 16 emanating from pump 18. The spraybars 20 act to diffuse an inerting gas such as nitrogen into the contents of the chamber thereby to create a relatively non-oxidising solder atmosphere. Obviously, the more efficient the diffusion process the lower the gas consumption will be and hence the lower the running cost.

Figure 2 illustrates a standard directional spraybar 20 in more detail. The holes 22 are generally provided in a row 21 extending substantially along the entire length thereof. Gas is sprayed out of holes 22 in a somewhat directional manner which does not encourage even diffusion of the gas within the chamber 12.

The sleeve arrangement 30, best seen in Figure 3, forms a diffusion apparatus 32 which, in operation is fitted and to spraybar 20 and is provided with a plurality of holes 33 greater in number than the holes 22 in the spraybar 20. In practice, the sleeve 30 can be formed from a mesh material 34 such as for example a sheet of stainless steel wire mesh. It will however be appreciated that any number of alternative arrangements may be employed without departing from the spirit of the present invention which is to provide a means of further diffusing gas emanating from the holes of a substantially standard spraybar 20. It has been found that a mesh formed from stainless steel wire having a diameter of 0.5mm and a mesh (or hole) size of up to 5mm performs the diffusion function admirably. Other alternatives, too numerous to mention, would present themselves to a person skilled in the art.

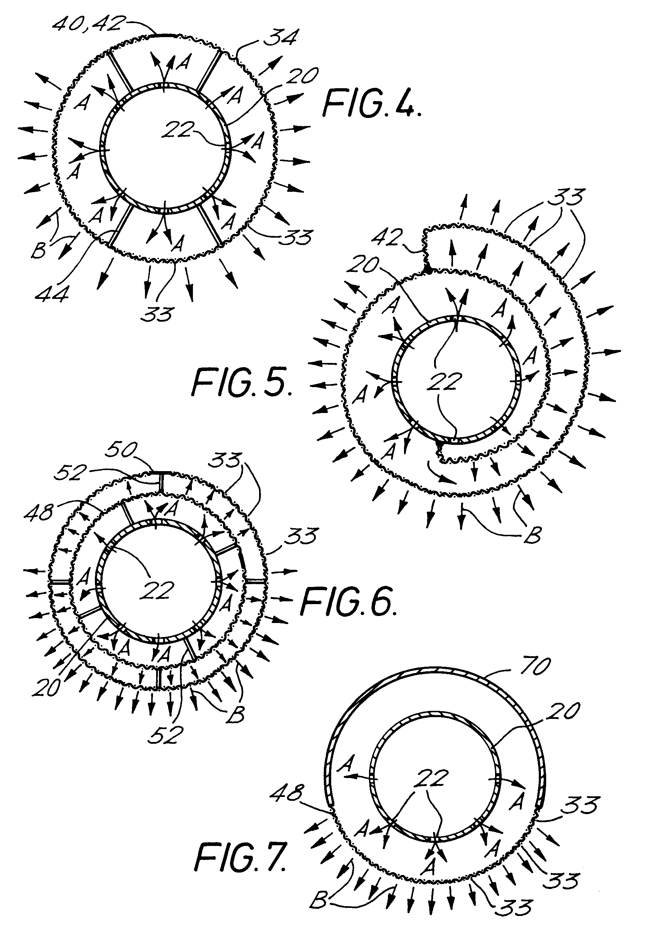

Figures 4, 5, 6 and 7 illustrate four possible alternative sleeve arrangements. In Figure 4, the sleeve comprises a single turn of mesh material joined at its ends 40, 42 and spaced from the spraybar by spacer 44. In a somewhat more elaborate arrangement illustrated in Figure 5, the mesh 34 is spirally wound 46 to form a multi layer sleeve, each layer being spaced from the other. Support means may be provided, alternatively, the ends 40, 42 may be bent over and secured in a convenient manner to the spraybar 20 and an outer surface of the sleeve in order to form a self supporting multi layer sleeve. A third form of sleeve is illustrated in Figure 6 in which a plurality of concentric sleeves 48, 50 similar to that shown in Figure 4 are provided. Each sleeve 48, 50 is spaced from its neighbour or the spraybar 20 by supports 52. Figure 4 illustrates an arrangement where only a portion of the sleeve 48 is provided with holes 33. The remaining portion 70 may be of conventional, unperforated, tube material which effectively acts to form a shroud.

The spraybar 20 may be provided with a plurality of rows 60 of holes 20, each row being circumferentially spaced from its next adjacent neighbour.

In operation, gas, such as nitrogen, is introduced into the spraybars 20 in the conventional manner and issues from the row or rows of holes 21, 60 in a somewhat directional or multi directional manner as shown by arrows A and B. When a single layer of mesh 30 is provided the gas is forced to further diffuse through substantial number of fine holes 33 before it enters the chamber 12. By passing the gas through such a large number of comparatively fine holes it has been found that the gas is more evenly diffused into the contents of the chamber 12, thereby increasing the level of oxidation protection and reducing the quantity of gas required to perform the anti-oxidation process adequately. Further diffusion is guaranteed by employing the multi layer arrangements illustrated in Figures 5 and 6 in which each layer acts to further diffuse to gas being passed therethrough. The arrangement illustrates in Figure 7 may be used where it is desirable to provide a semi directional but highly diffused gas flow.

One of the advantages of employing a mesh material having a large number of comparatively small 33 holes is that the exit area is sufficiently large as to cause little or no back pressure. Additionally, it will be appreciated that with such an arrangement, the spraybar 20 may be of conventional from thus avoiding the use of expensive and easily broken sintered spraybars.

It will be appreciated that whilst the present invention has been described with reference to gas diffusion the same arrangement could be used as a liquid diffuser.

## Claims

1. A diffusion apparatus (32) for use with a spraybar (20) comprising a tube having a plurality of holes (22) provided therein for the passage of a fluid therethrough, characterised in that the diffusion apparatus (32) comprises a sleeve (30) for fitment over said spraybar (20) and has a plurality of holes (33) greater in number than the holes (22) in the spraybar (20) over which in operation it is fitted.

2. A diffusion apparatus (32) as claimed in claim 1 characterised in that the sleeve (30) comprises a mesh.

3. A diffusion apparatus (32) as claimed in claim 1 or claim 2 characterised in that said sleeve (30) comprises a sheet of mesh material spirally wound to form a sleeve of two or more mesh layers.

4. A diffusion apparatus (32) as claimed in claim 1 or claim 2 characterised in that said sleeve (30) comprises a plurality of concentric sleeves (48, 50).

5. A diffusion apparatus (32) as claimed in any one of the preceding claims characterised by securing means for securing the sleeve (30) to the spraybar (20).

6. A diffusion apparatus (32) as claimed in claim 5 characterised in that said securing means comprises a plurality of straps around said sleeve (30).

7. A diffusion apparatus (32) as claimed in any one of the preceding claims characterised in that the sleeve (30) comprises a stainless steel wire mesh.

8. A diffusion apparatus (32) as claimed in any one of the previous claims characterised in that the sleeve (30) has a mesh size substantially 1mm.

9. A diffusion apparatus (32) as claimed in claim 7 or claim 8 characterised in that the wire has a diameter of substantially 0.5mm.

10. A diffusion apparatus (32) as claimed in any one of the previous claims characterised in that said sleeve (30) further includes an unperforated shroud portion.

11. A diffusion apparatus (32) as claimed in any one of claims 1 to 10 characterised by the provision of a spraybar (20) having a plurality of holes (21,22) provided therein for the passage of a fluid therethrough.

12. A diffusion apparatus (32) as claimed in claim 11 including a plurality of rows of holes, each row extending along the length of said spraybar (20) and being circumferentially spaced from the next adjacent row.
